(19) **Europäisches Patentamt / European Patent Office / Office européen des brevets**

(11) **EP 1 500 248 B1**

(12) **EUROPEAN PATENT SPECIFICATION**

(45) Date of publication and mention of the grant of the patent:
**23.07.2008 Bulletin 2008/30**

(51) Int Cl.:
***H04L 29/06*** (2006.01)    ***H04L 29/08*** (2006.01)

(21) Application number: **03745865.0**

(22) Date of filing: **28.03.2003**

(86) International application number:
**PCT/IB2003/001252**

(87) International publication number:
**WO 2003/085928 (16.10.2003 Gazette 2003/42)**

(54) **SYSTEM UND METHOD FOR DATA TRANSMISSION COMBINING DOWNLOADING AND STREAMING**

SYSTEM UND VERFAHREN ZUR DATENÜBERTRAGUNG MIT KOMBINIERTEM HERUNTERLADEN UND STREAMING

SYSTEME ET PROCEDE DE TRANSMISSION DE DONNEES ASSOCIANT DES OPERATIONS DE TELECHARGEMENT ET DE DIFFUSION EN CONTINU

(84) Designated Contracting States:
**AT BE BG CH CY CZ DE DK EE ES FI FR GB GR HU IE IT LI LU MC NL PT RO SE SI SK TR**

(30) Priority: **09.04.2002  EP 02290889**

(43) Date of publication of application:
**26.01.2005  Bulletin 2005/04**

(73) Proprietor: **Koninklijke Philips Electronics N.V.**
**5621 BA  Eindhoven (NL)**

(72) Inventor: **FAY, Laurent**
**F-75008 Paris (FR)**

(74) Representative: **van Oudheusden-Perset, Laure E. et al**
**Philips Intellectual Property & Standards**
**156, Boulevard Haussmann**
**75008 Paris (FR)**

(56) References cited:
**EP-A- 1 187 423        WO-A-01/98920**
**US-A- 6 029 200**

**Description**

FIELD OF THE INVENTION

The invention relates to a transmission system comprising a transmitter, a receiver having a content player, and a transmission channel between said transmitter and said receiver, said transmission channel having a channel transmission rate, said transmitter and said receiver supporting a transport protocol with rate control and a transport protocol without rate control.

The invention also relates to a transmitter and a receiver intended to be used in such a transmission system.

The invention also relates to a transmission method and a program comprising instructions for implementing such a transmission method.

The invention has interesting applications, notably for transmitting audio or video via the Internet.

BACKGROUND OF THE INVENTION

As described in US patent 6,029,200, two approaches may be used to transmit a multimedia content via an intranet or via the Internet. In the first approach, the multimedia content is downloaded, which means that it must be copied to the user before it can be played. In the second approach, the multimedia content is streamed, which means that it is supplied to the user as a continuous flow of data with little waiting time before playback begins. US patent 6,029,200 describes a streaming system in which the transmitter and the receiver support various network transport protocols including UDP and TCP transport protocols, said various transport protocols being tried in a predefined order when attempting to start streaming.

These approaches have the following drawbacks:

- The downloading approach introduces a latency at the user side (the user has to wait until the end of the transmission to start playing the data).
- Transport protocols with rate control (like TCP) are not well suited to the streaming of audio/video data because the rate control may disturb the continuity of the rendering of the audio /video (if the transport protocol imposes an abrupt variation of the transmission
- rate, the receiver will not receive the data to be rendered in time, which will lead to an interruption in the audio/video rendering).
- In order to successfully stream data using a transport protocol without rate control (like UDP), the encoding rate of the data shall not be higher than the transmission rate of the channel. When transmitting data via the Internet, the channel transmission rate notably depends on how the client is connected to the Internet (32 kbps or 56kbps modem, ADSL...). Typically, several data files are stored at the server side for the same content, each data file corresponding to a different encoding bit rate of the content. When requesting a content, the client has to indicate how he is connected to the Internet, which automatically designates the data file to be transferred. Thus, the encoding rate of the transmitted data file, and therefore the quality of the rendered content, is limited by the transmission rate of the Internet connection of the client.

EP-A-1 187 423 describes a method in which a single piece of content is distributed by switching between a streaming distribution and a buffering distribution. More specifically, when starting distribution, streaming distribution is used. As a result, a receiving side has little waiting time. When the transmission error rate increases, streaming distribution is changed to buffering distribution so as to prevent deterioration in image quality and sound quality. When the bandwidth of a transmission channel allows only a low tolerance, the distribution method is changed to streaming distribution using multicasting for content that can be distributed using multicast communication.

WO 01/98920 describes a method wherein some segments of a program are pre-stored in a memory at the premises of a customer. When the customer activates a request, the remaining segments of the program are streamed over a network from a designated server to a customer's device, where these segments are combined with the pre-stored segments for the purpose of rendering.

It is an object of the invention to propose a transmission system, a transmitter, a receiver, a transmission method and a program for implementing a transmission method that do not have the above-mentioned drawbacks.

SUMMARY OF THE INVENTION

Claim 1, which is appended to the description, defines a transmission system according to the invention.

The invention is a combination of the above-mentioned downloading and streaming approaches. During a first period of time, the data are downloaded, using a transport protocol with rate control (like the TCP protocol), and during a second period of time, the data are streamed, using a transport protocol without rate control (like the UDP protocol).

The channel transmission rate may vary in time depending on the congestion state of the transmission channel. The duration of the downloading period depends on the difference between the encoding rate of the data file to be transmitted and the channel transmission rate at the time of transmission (called effective channel transmission rate hereinafter).

Such a combination makes it possible to transmit a data file having an encoding bit rate that is higher than said channel transmission rate, and therefore to improve the quality of the rendered content.

The solution offered by the invention has the following advantages:

- It limits the latency that is inherent in the downloading approach.
- The transport protocol with rate control is used for downloading but not for streaming.
- When the proportionality factor is equal to one, the second period of time is equal to the duration of the content. By doing so, the network resources are used in an optimal way (if the second period of time was shorter than the duration of the content, the available transmission time will not be fully used). As far as the state of the transmission channel does not significantly change during said second period of time, interruptions in the rendering are avoided (interruptions occur if the second period of time is longer than the duration of the content). When there is an important risk for the state of the transmission channel to change, the proportionality factor may be chosen smaller than one, to make sure that there will not be any interruptions in the rendering of the data.

Claim 2, which is appended to description, defines a first embodiment of the invention.

In this first embodiment, the data file to be transferred is specified by the client, and the transmitter calculates the duration of the downloading period depending on the effective channel transmission rate, so that the duration of the streaming period is proportional to the duration of the content.

Claim 3, which is appended to the description, defines a second embodiment of the invention.

In this second embodiment, the client does not specify the data file to be transferred but the latency time he is accepting before starting the rendering of the data. The duration of the downloading mode shall be near the authorized latency time. The transmitter first has to make an evaluation of the effective channel transmission rate. Knowing the effective channel transmission rate, it then selects the data file of maximum encoding rate that can be transmitted with a duration of the downloading mode near the authorized latency time.

BRIEF DESCRIPTION OF THE DRAWINGS

The invention will be further described with reference to the accompanying drawings:

Fig.1 is a schematic representation of an example of a transmission system according to the invention,
Fig.2 is a schematic representation of data exchanges in a transmission system according to the invention,
Fig.3 is a diagram explaining the operation of the transmission system according to the invention,

Fig.4 is a flow chart of an example of a transmission method according to the invention.

DESCRIPTION OF PREFERRED EMBODIMENT

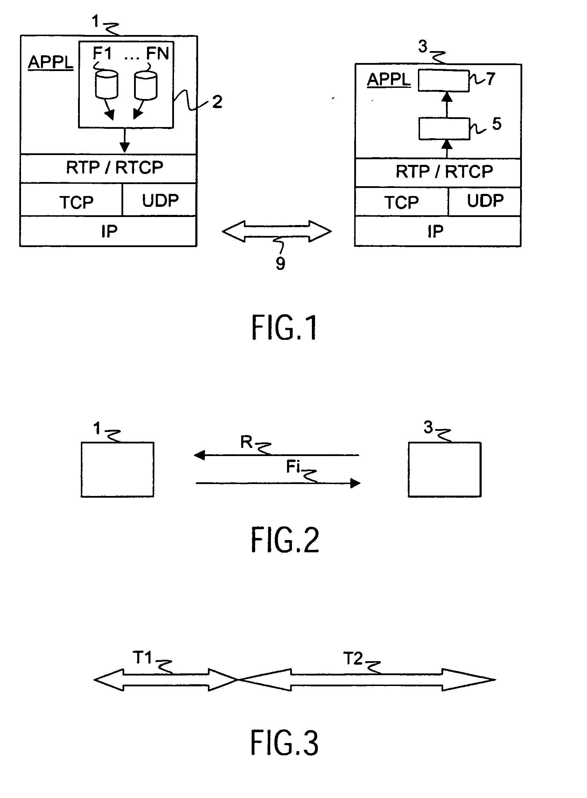

A schematic representation of a transmission system according to the invention is given in Figure 1. Such a transmission system comprises a transmitter 1 having a content server 2, a receiver 3 having a reception buffer 5 and a content player 7, and a transmission channel 9. The content server 2 stores data files F1, ..., Fi, ..., FN.

Both the transmitter 1 and the receiver 3 support a transport protocol with rate control, and a transport protocol without rate control.

A transport protocol with rate control estimates the channel available bandwidth from information received from the receiver, generates target output bit rates from these estimations, and controls the transmission times of the data to enforce said target output bit rates.

In contrast, a transport protocol without rate control does not control the transmission times of the data. When a transport protocol without rate control is used, the output bit rate is set by the application APPL.

For instance, the transport protocol with rate control is the TCP protocol (Transmission Control Protocol), and the transport protocol without rate control is the UDP protocol (User Datagram Protocol). Typically, TCP and UDP run via the IP protocol.

Both the transmitter 1 and the receiver 3 also support on top of said transport protocols the Real-time Transport Protocol (RTP) defined in the RFC 1889 by the IETF (Internet Engineering Task Force). The aim of the RTP protocol is to provide end-to-end transport functions suitable for applications transmitting real-time data, such as audio or video. The RTP protocol comprises a control protocol (RTCP) that provides control functionalities. RTP and RTCP are designed to be independent of the underlying transport protocols.

As represented in Figure 2, the receiver 3 is configured to send content requests R to the transmitter 1, and the transmitter 1 is configured to respond to such requests by sending a data file Fi containing the requested content encoded at a certain encoding rate.

The operation of the transmission system represented in Fig.1 will now be described with reference to Figure 3. According to Figure 3, the transmission of a data file containing a content of known duration $P$ from the transmitter 1 to the receiver 3 is achieved by:

- using the transport protocol with rate control (for example, TCP) during a first period of time T1 while storing the received data in the reception buffer 5 of the receiver 3,
- using the transport protocol without rate control (for example, UDP) during a second period of time T2,
- starting the rendering of the received data at the beginning of the second period of time.

The receiver 3 has the ability to detect the change of transport protocol by watching the received packets (for instance, it has the ability to detect whether the packets are TCP packets or UDP packets). Optionally, the transmitter 1 notifies the receiver 3 when it switches from the downloading mode to the streaming mode by sending an RTCP packet to the receiver 3. Such a notification may be used as a starting signal by the content player 7.

In the first embodiment of the invention, the client specifies in his request R the data file he wants to receive.

For a given data file, the switching point between the first and the second period of time is determined from an estimation of the channel transmission rate so that the second period of time is proportional to the known duration of the content, with a proportionality factor $K$ smaller than or equal to one.

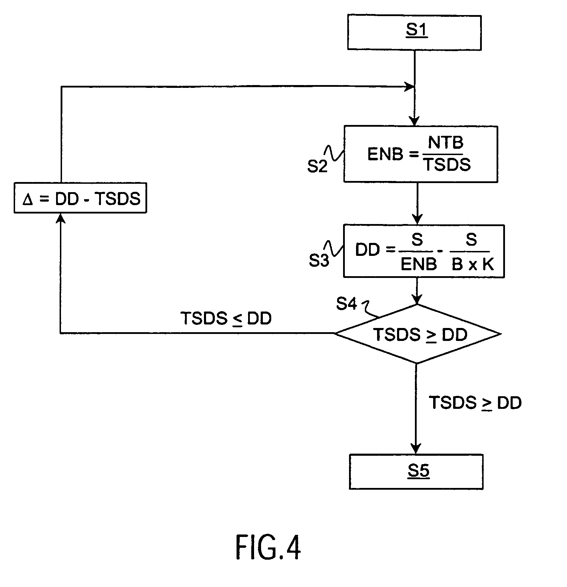

The determination of the switching point from the downloading mode to the streaming mode will now be described with reference to Figure 4. According to Figure 4:

- at step S1, the downloading of the data file starts.
- at step S2, the current transmission rate of the channel $ENB$ is estimated:

$$ENB = \frac{NTB}{TSDS}$$

where $NTB$ is the number of bytes that have already been transmitted $TSDS$ is the time (in seconds) since the download started

- at step S3, an estimation $DD$ of the first period of time is calculated:

$$DD = \frac{S}{ENB} - \frac{S}{B \times K}$$

where $S$ is the size of the data file (in bytes)
$B$ is the encoding rate of the content for the data file to be transmitted (in bytes/s)

$P = \frac{S}{B}$ is the duration of the content (in seconds),

$K$ is a proportionality factor smaller than or equal to one.

- at step S4, the time since download started $TSDS$ is compared with the estimation of the first period of time $DD$. If it is higher than or equal to the estimation of the first period of time, the transmitter switches to the streaming mode (step S5). If it is lower than the estimation of the first period of time, the transmitter waits a certain time $\Delta$ before returning to step S2. For example, $\Delta = DD - TSDS$.
- at step S5, the rest of the data file is streamed.

An example will now be given to illustrate the invention. If $B$ =5kB/s, $P = \frac{S}{B} = 300s$, $S$ =1,5MB, for a network bit rate equal to 4kB/s, the duration of the first period of time will be 75s. It can be seen from that example that the invention allows transmission of a data file having a bit rate of 5kB/s through a transmission channel having a bit rate of 8kB/s. The latency introduced in that case is equal to 75s only.

In the second embodiment of the invention, the client specifies in his request R an authorized latency time $LT$, and the server selects the data file to be transmitted depending on this authorized latency time, and on an estimation of the channel transmission rate $ENB$ :

$$B \approx \left( \frac{LT}{P} + \frac{1}{K} \right) \times ENB$$

where the sign «≈» means « near »
In order to select the data file to be transmitted, the server first has to make an estimation of the effective channel transmission rate. This is achieved by sending learning data to the receiver:

- either by using the transport protocol with rate control,
- or by using the transport protocol without rate control at a transmission rate which is higher than the supposed channel transmission rate, and using control information sent back by the receiver (for example, via RTCP packets) to estimate the effective channel transmission rate.

Once the data file to be transmitted has been selected, the effective duration of the first period of time is:

- either calculated as described above with reference to Figure 4 for the first embodiment of the invention,
- or fixed to the authorized latency indicated in the client's request.

The above described transmission method is preferably implemented by means of sets of instructions being executable under the control of computers or digital processors located at the transmitter and at the receiver.
It is to be noted that, with respect to the described method, receiver, transmitter and transmission network, modifications or improvements may be proposed without departing from the scope of the invention. The invention is thus not limited to the examples provided.

Use of the verb "comprise" and its conjugations does not exclude the presence of elements or steps other than those stated in the claim.

## Claims

1. A transmission system comprising a transmitter (1), a receiver (3) having a content player (7), and a transmission channel (9) between said transmitter and said receiver, said transmission channel having a channel transmission rate, **characterized in that** said transmitter and said receiver are configured such that, for transmission from said transmitter to said receiver of a data file (Fi) containing a content of known duration encoded at an encoding rate (B) which is higher than said channel transmission rate, the transmitter starts a transmission of the data file using a transport protocol with rate control (TCP) during a first period of time (T1) while the receiver stores the received data, and the transmitter continues the transmission of the data file using a transport protocol without rate control (UDP) during a second period of time (T2) while the receiver plays the received data, said first period of time having a duration (DD) that depends on a difference between said encoding rate and said channel transmission rate, said second period of time being proportional to said known duration, with a proportionality factor (K) smaller than or equal to one.

2. A transmission system as claimed in claim 1, wherein said receiver (3) is configured to send a request (R) for a specific data file (Fi), and said transmitter (1) is configured to:

   - calculate estimations (ENB) of said channel transmission rate during said first period of time (T1),
   - calculate estimations (DD) of said first period of time from said estimations of the channel transmission rate,
   - terminate said first period of time when the estimation of said first period of time is substantially equal to the time passed (TSDS) since the beginning of the transmission of said data file.

3. A transmission system as claimed in claim 1, wherein said receiver (3) is configured to send a request (R) for a content, said request indicating an authorized latency time, and said transmitter (1) is configured to:

   - send learning data to said receiver for calculating an estimation (ENB) of said channel transmission rate,
   - select the data file (Fi) to be transmitted, from said estimation of the channel transmission rate and from said authorized latency time.

4. A transmitter (1) configured such that, for transmission via a transmission channel (9) having a channel transmission rate of a data file (Fi) containing a content of known duration encoded at an encoding rate (B) which is higher than said channel transmission rate, the transmitter starts a transmission of the data file using a transport protocol with rate control (TCP) during a first period of time (T1), and continues the transmission of the data file using a transport protocol without rate control (UDP) during a second period of time (T2), said first period of time having a duration (DD) that depends on a difference between said encoding rate and said channel transmission rate, said second period of time being proportional to said known duration, with a proportionality factor (K) smaller than or equal to one.

5. A transmitter as claimed in claim 4, further configured such that, when receiving a request (R) for a specific data file (Fi), it:

   - calculates estimations (ENB) of the channel transmission rate during said first period of time (T1),
   - calculates estimations (DD) of said first period of time from said estimations of the channel transmission rate,
   - terminates said first period of time when the estimation of said first period of time is substantially equal to the time passed (TSDS) since the beginning of the transmission of said data file.

6. A transmitter as claimed in claim 4, further configured such that, when receiving a request (R) for a content, which request indicates an authorized latency time, it:

   - sends learning data to said receiver for calculating an estimation (ENB) of said channel transmission rate,
   - selects the data file (Fi) to be transmitted, from said estimation of the channel transmission rate and from said authorized latency time.

7. A receiver (3) having a content player (7), **characterized in that** said receiver is configured such that, for reception via a transmission channel (9) having a channel transmission rate of a data file (Fi) containing a content of known duration encoded at an encoding rate (B) which is higher than said channel transmission rate, the receiver starts receiving the data file using a transport protocol with rate control (TCP) during a first period of time (T1) while storing the received data, and continues receiving the data file using a transport protocol without rate control (UDP) during a second period of time (T2) while playing the received data, said first period of time having a duration (DD) that depends on a difference between said encoding rate and said channel transmission rate, said second period of time being proportional to said known duration, with a proportionality factor (K) smaller than or equal to one.

8. A receiver as claimed in claim 7, further configured to send a request (R) for a content, said request indicating a value for said first period of time (T1).

9. A transmission method for transmitting, via a transmission channel (9) having a channel transmission rate, a data file (Fi) containing a content of known duration, **characterized in that** the data file has been encoded at an encoding rate (B) which is higher than said channel transmission rate, said transmission method comprising the steps of:

   - starting a transmission (S1) of the data file using a transport protocol with rate control (TCP) during a first period of time (T1), while storing the received data, said first period of time having a duration (DD) that depends on a difference between said encoding rate and said channel transmission rate; and
   - continuing the transmission (S5) of the data file using a transport protocol without rate control (UDP) during a second period of time (T2), while playing the received data, said second period of time being proportional to said known duration, with a proportionality factor (K) smaller than or equal to one.

10. A program comprising instructions for implementing a transmission method as claimed in claim 9, when executed by a processor.

**Patentansprüche**

1. Übertragungssystem mit einem Sender (1), einem Empfänger (3) mit einem Inhaltsspieler (7), und einem Übertragungskanal (9) zwischen dem genannten Sender und dem genannten Empfänger, wobei der genannte Übertragungskanal eine Kanalübertragungsfrequenz hat, **dadurch gekennzeichnet, dass** der genannte Sender und der genannte Empfänger derart konfiguriert sind, dass zur Übertragung einer Datei (Fi) mit einem Inhalt einer bekannten Dauer von dem genannten Sender zu dem genannten Empfänger, wobei diese Dauer mit einer Codierungsfrequenz (B) codiert ist, wobei diese Frequenz höher ist als die genannte Kanalübertragungsfrequenz, dass der Sender eine Übertragung der Datei unter Anwendung eines Transportprotokolls (TCP) während einer ersten Zeitperiode (T1) startet, während der Empfänger die empfangenen Daten speichert, und dass der Sender die Übertragung der Datei unter Anwendung eines Transportprotokolls ohne Frequenzsteuerung (UDP) während einer zweiten Zeitperiode (T2) fortsetzt, während der Empfänger die empfangenen Daten abspielt, wobei die genannte erste Zeitperiode eine Dauer (DD) hat, die von der Differenz zwischen der genannten Codierungsfrequenz und der genannten Kanalübertragungsfrequenz abhängig ist, wobei die genannte zweite Zeitperiode zu der genannten bekannten Dauer proportional ist, und zwar mit einem Proportionalitätsfaktor (K), der kleiner als oder gleich Eins ist.

2. Übertragungssystem nach Anspruch 1, wobei der genannte Empfänger (3) derart konfiguriert ist, dass dieser einen Antrag (R) für eine bestimmte Datei (FI) sendet, und wobei der genannte Sender (1) derart konfiguriert ist, dass er

   - Schätzungen (ENB) der genannten Kanalübertragungsfrequenz während der genannten ersten Zeitperiode (T1) berechnet,
   - Schätzungen (DD) der genannten ersten Zeitperiode aus den genannten Schätzungen der Kanalübertragungsfrequenz berechnet,
   - die genannte erste Zeitperiode abschließt, wenn die Schätzung der genannten ersten Zeitperiode im Wesentlichen der Zeit entspricht, die seit dem Anfang der Übertragung der genannten Datei vergangen ist (TSDS).

3. Übertragungssystem nach Anspruch 1, wobei der genannte Empfänger (3) derart konfiguriert ist, dass er einen Antrag (R) für einen Inhalt sendet, wobei der genannte Inhalt eine berechtigte Latenzzeit angibt, und der genannte Sender (1) derart konfiguriert ist, dass er:

   - dem genannten Empfänger Lerndaten zusendet, und zwar zum Berechnen einer Schätzung (ENB) der genannten Kanalübertragungsfrequenz,
   - die zu übertragende Datei (Fi) aus der genannten Schätzung der Kanalübertragungsfrequenz und aus der genannten berechtigten Latenzzeit selektiert.

4. Sender (1), der derart konfiguriert ist, dass dieser Sender zur Übertragung über einen Übertragungskanal (9) mit einer Kanalübertragungsfrequenz einer Datei (Fi) mit einem Inhalt einer bekannten Dauer, codiert mit einer Codierungsfrequenz (B), die höher ist als die genannte Kanalübertragungsfrequenz, eine Übertragung der Datei startet, und zwar unter Anwendung eines Transportprotokolls (TCP) während einer ersten Zeitperiode (T1), und dass der Sender die Übertragung der Datei unter Anwendung eines Transportprotokolls ohne Frequenzsteuerung (UDP) während einer zweiten Zeitperiode (T2) fortsetzt, wobei die genannte erste Zeitperiode eine Dauer (DD) hat, die von einer Differenz zwischen der genannten Codierungsfrequenz und der genannten Kanalübertragungsfrequenz abhängig ist, wobei die genannte zweite Zeitperiode zu der genannten bekannten Dauer proportional ist, und zwar mit einem Proportionalitätsfaktor (K), der kleiner als oder gleich Eins ist.

5. Sender nach Anspruch 4, der weiterhin derart konfiguriert ist, dass er beim Empfang eines Antrags (R) für eine bestimmte Datei (Fi) Folgendes durchführt:

- er berechnet Schätzungen (ENB) der Kanalübertragungsfrequenz während der genannten ersten Zeitperiode (T1),
- er berechnet Schätzungen (DD) der genannten ersten Zeitperiode aus den genannten Schätzungen der Kanalübertragungsrate,
- er beendet die genannte erste Zeitperiode, wenn die Schätzung der genannten ersten Zeitperiode im Wesentlichen der Zeit entspricht, die seit dem Anfang der Übertragung der genannten Datei vergangen ist.

6. Sender nach Anspruch 4, weiterhin derart konfiguriert, dass dieser Sender beim Empfang eines Antrags (R) für einen Inhalt, wobei dieser Antrag eine berechtigte Latenzzeit angibt, Folgendes durchführt:

- er sendet Lerndaten zu dem genannten Empfänger zum Berechnen einer Schätzung (ENB) der genannten Kanalübertragungsfrequenz,
- er selektiert die zu übertragende Datei (Fi), und zwar aus der genannten Schätzung der Kanalübertragungsfrequenz und aus der genannten berechtigten Latenzzeit.

7. Sender (3) mit einem Inhaltsspieler (7), **dadurch gekennzeichnet, dass** der genannte Empfänger derart konfiguriert ist, dass für den Empfang einer Datei (Fi) über einen Übertragungskanal (9) mit einer Kanalübertragungsfrequenz, wobei die Datei einen Inhalt einer bekannten Dauer enthält, codiert mit einer Codierungsfrequenz (B), die höher ist als die genannte Kanalübertragungsfrequenz, dass der Empfänger den Empfang der Datei startet, und zwar unter Anwendung eines Transportprotokolls (TCP) während einer ersten Zeitperiode (T1), während die empfangenen Daten gespeichert werden, und den Empfang der Datei unter Anwendung eines Transportprotokolls ohne Frequenzsteuerung (UDP) während einer zweiten Zeitperiode (T2) fortsetzt, während die empfangenen Daten abgespielt werden, wobei die genannte erste Zeitperiode eine Dauer (DD) hat, die von einer Differenz zwischen der genannten Codierungsfrequenz und der genannten Kanalübertragungsfrequenz abhängig ist, wobei die genannte zweite Zeitperiode zu der genannten bekannten Dauer proportional ist, und zwar mit einem Proportionalitätsfaktor (K), der kleiner als oder gleich Eins ist.

8. Empfänger nach Anspruch 7, weiterhin derart konfiguriert, dass er einen Antrag (R) für einen Inhalt sendet, wobei der genannte Antrag einen Wert für die genannte erste Zeitperiode (T1) angibt.

9. Übertragungsverfahren zum Übertragen einer Datei (Fi), und zwar über einen Übertragungskanal (9) mit einer Kanalübertragungsfrequenz, wobei die Datei einen Inhalt einer bekannten Dauer enthält, **dadurch gekennzeichnet, dass** die Datei mit einer Codierungsfrequenz (B) codiert ist, die höher ist als die genannte Kanalübertragungsfrequenz, wobei das genannte Übertragungsverfahren die nachfolgenden Verfahrensschritte umfasst:

- das Starten einer Übertragung (S1) der Datei unter Anwendung eines Transportprotokolls mit einer Frequenzsteuerung (TCP) während einer ersten Zeitperiode (T1), während die empfangenen Daten gespeichert werden, wobei die genannte erste Zeitperiode eine Dauer (DD) hat, die von einer Differenz zwischen der genannten Codierungsfrequenz und der genannten Kanalübertragungsfrequenz abhängig ist; und
- das Fortsetzen der Übertragung (S5) der Datei, und zwar unter Anwendung eines Transportprotokolls ohne Frequenzregelung (UDP) während einer zweiten Zeitperiode (T2), während die empfangenen Daten abgespielt werden, wobei die genannte zweite Zeitperiode zu der genannten bekannten Dauer proportional ist, mit einem Proportionalitätsfaktor (K), der kleiner oder gleich Eins ist.

10. Programm mit Instruktionen zum Implementieren eines Übertragungsverfahrens nach Anspruch 9, wenn von einem Prozessor durchgeführt.

## Revendications

1. Système de transmission comprenant un émetteur (1), un récepteur (3) ayant un lecteur de contenu (7) et un canal de transmission (9) entre ledit émetteur et ledit récepteur, ledit canal de transmission ayant un taux de transmission de canal, **caractérisé en ce que** ledit émetteur et ledit récepteur sont configurés de telle façon que, pour la transmission à partir dudit émetteur audit récepteur d'un fichier de données (Fi) contenant un contenu d'une durée connue qui est codé à un taux de codage (B) qui est supérieur audit taux de transmission de canal, l'émetteur commence une transmission du fichier de données utilisant un protocole de transport avec la commande de taux (TCP) au cours d'une première période de temps (T1) alors que le récepteur stocke les données reçues et l'émetteur continue la transmission du fichier de données utilisant un protocole de transport sans la commande de taux (UDP) au cours d'une deuxième période de temps (T2) alors que le récepteur lit les données reçues, ladite première période de temps ayant une durée (DD) qui dépend d'une différence entre ledit taux de codage et ledit taux de transmission de canal, ladite deuxième période de temps étant proportionnelle à ladite durée connue, avec un facteur de proportionnalité (K) qui est inférieur ou égal à un.

2. Système de transmission selon la revendication 1, dans lequel ledit récepteur (3) est configuré de manière à envoyer une demande (R) d'un fichier de données spécifique (Fi) et dans lequel ledit émetteur (1) est configuré de manière à:

- calculer des évaluations (ENB) dudit taux de transmission de canal au cours de ladite première période de temps (T1),
- calculer des évaluations (DD) de ladite première période de temps à partir desdites évaluations du taux de transmission de canal,
- terminer ladite première période de temps lorsque l'évaluation de ladite première période de temps est sensiblement égale au temps écoulé (TSDS) depuis le commencement de la transmission dudit fichier de données.

3. Système de transmission selon la revendication 1, dans lequel ledit récepteur (3) est configuré de manière à envoyer une demande (R) d'un contenu, ladite demande indiquant un temps de latence autorisé et dans lequel ledit émetteur (1) est configuré de manière à:

- envoyer des données d'apprentissage audit récepteur pour calculer une évaluation (ENB) dudit taux de transmission de canal,
- sélectionner le fichier de données (Fi) à transmettre à partir de ladite évaluation du taux de transmission de canal et à partir dudit temps de latence autorisé.

4. Emetteur (1) qui est configuré de telle façon que, pour la transmission par le biais d'un canal de transmission (9) ayant un taux de transmission de canal d'un fichier de données (Fi) contenant un contenu d'une durée connue qui est codé à un taux de codage (B) qui est supérieur audit taux de transmission de canal, l'émetteur commence une transmission du fichier de données utilisant un protocole de transport avec la commande de taux (TCP) au cours d'une première période de temps (T1) et continue la transmission du fichier de données utilisant un protocole de transport sans la commande de taux (UDP) au cours d'une deuxième période de temps (T2), ladite première période de temps ayant une durée (DD) qui dépend d'une différence entre ledit taux de codage et ledit taux de transmission de canal, ladite deuxième période de temps étant proportionnelle à ladite durée connue, avec un facteur de proportionnalité (K) qui est inférieur ou égal à un.

5. Emetteur selon la revendication 4, qui est encore configuré de telle façon que, lorsqu'il reçoit une demande (R) d'un fichier de données spécifique (Fi), il:

- calcule les évaluations (ENB) du taux de transmission de canal au cours de ladite première période de temps (T1),
- calcule les évaluations (DD) de ladite première période de temps à partir desdites évaluations du taux de transmission de canal,
- termine ladite première période de temps lorsque l'évaluation de ladite première période de temps est sensiblement égale au temps écoulé (TSDS) depuis le commencement de la transmission dudit fichier de données.

6. Emetteur selon la revendication 4, qui est encore configuré de telle façon que, lorsqu'il reçoit une demande (R) d'un contenu, laquelle demande indique un temps de latence autorisé, il:

- envoie les données d'apprentissage audit récepteur pour calculer une évaluation (ENB) dudit taux de transmission de canal,
- sélectionne le fichier de données (Fi) à transmettre à partir de ladite évaluation du taux de transmission de canal et à partir dudit temps de latence autorisé.

7. Récepteur (3) ayant un lecteur de contenu (7), **caractérisé en ce que** ledit récepteur est configuré de telle façon que, pour la réception par le biais d'un canal de transmission (9) ayant un taux de transmission de canal d'un fichier de données (Fi) contenant un contenu d'une durée connue qui est codé à un taux de codage (B) qui est supérieur audit taux de transmission de canal, le récepteur commence la réception du fichier de données utilisant un protocole de transport avec la commande de taux (TCP) au cours d'une première période de temps (T1) alors qu'il stocke les données reçues et continue la réception du fichier de données utilisant un protocole de transport sans la commande de taux (UDP) au cours d'une deuxième période de temps (T2) alors qu'il lit les données reçues, ladite première période de temps ayant une durée (DD) qui dépend d'une différence entre ledit taux de codage et ledit taux de transmission de canal, ladite deuxième période de temps étant proportionnelle à ladite durée connue, avec un facteur de proportionnalité (K) qui est inférieur ou égal à un.

8. Récepteur selon la revendication 7, qui est encore configuré de manière à envoyer une demande (R) d'un contenu, ladite demande indiquant une valeur pour ladite première période de temps (T1).

9. Procédé de transmission pour transmettre, par le biais d'un canal de transmission (9) ayant un taux de transmission de canal, un fichier de données (Fi) contenant un contenu d'une durée connue, **caractérisé en ce que** le fichier de données a été codé à un taux de codage (B) qui est supérieur audit taux de transmission de canal, ledit procédé de transmission comprenant les étapes consistant à:

   - commencer une transmission (S1) du fichier de données utilisant un protocole de transport avec la commande de taux (TCP) au cours d'une première période de temps (T1) alors qu'il stocke les données reçues, ladite première période de temps ayant une durée (DD) qui dépend d'une différence entre ledit taux de codage et ledit taux de transmission de canal; et
   - continuer la transmission (S5) du fichier de données utilisant un protocole de transport sans la commande de taux (UDP) au cours d'une deuxième période de temps (T2) alors qu'il lit les données reçues, ladite deuxième période de temps étant proportionnelle à ladite durée connue, avec un facteur de proportionnalité (K) qui est inférieur ou égal à un.

10. Programme comprenant des instructions pour la mise en oeuvre d'un procédé de transmission selon la revendication 9, lorsqu'il est exécuté par un processeur.

EP 1 500 248 B1

**FIG.1**

**FIG.2**

**FIG.3**

10

$$ENB = \frac{NTB}{TSDS} \quad S2$$

$$DD = \frac{S}{ENB} - \frac{S}{B \times K} \quad S3$$

S1

S4 — TSDS $\geq$ DD

TSDS $\leq$ DD

$\Delta$ = DD - TSDS

TSDS $\geq$ DD

S5

FIG.4

**EP 1 500 248 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6029200 A
- EP 1187423 A
- WO 0198920 A